# EUROPÄISCHE PATENTSCHRIFT

(11) **EP 3 911 540 B1**
(45) Veröffentlichungstag und Bekanntmachung des Hinweises auf die Patenterteilung: **20.11.2024**
(21) Anmeldenummer: 20709483.0
(22) Anmeldetag: 13.01.2020
(51) Int. Cl.: B60R 21/26

(54) **AIRBAGMODUL**
AIRBAG MODULE
MODULE DE SAC GONFLABLE

(30) Priorität: 16.01.2019 DE 102019200431
(43) Veröffentlichungstag der Anmeldung: 24.11.2021
(73) Patentinhaber: Vitesco Technologies GmbH, 93055 Regensburg (DE)
(72) Erfinder: BLEECK, Matthias, 90411 Nürnberg (DE); AUMÜLLER, Christoph, 90411 Nürnberg (DE); NIGRIN, Uwe, 90411 Nürnberg (DE)
(74) Vertreter: Vitesco Technologies
(86) Internationale Anmeldenummer: PCT/DE2020/200003
(87) Internationale Veröffentlichungsnummer: WO 2020/147896

(56) Entgegenhaltungen:
- WO-A1-00/21800
- WO-A1-2018/197369
- WO-A1-97/34785
- US-A1- 2007 228 013

## Beschreibung

Die Erfindung betrifft ein Airbagmodul, das als Teil eines Airbagsystems für gewöhnlich in Kraftfahrzeugen Teil eines Insassenrückhaltesystems bildet.

Airbagsysteme bilden heutzutage gemeinsam mit Sicherheitsgurten die wichtigsten passiven Sicherheitselemente eines Insassenrückhaltesystems in einem Kraftfahrzeug, das schwerwiegenden Verletzungen bei einem Aufprall des Kraftfahrzeuges auf ein Hindernis entgegenwirken soll.

Airbagsysteme weisen zumeist mehrere Airbagmodule auf, die jeweils wenigstens einen Airbagsack umfassen, der, wenn es zu einem Aufprall kommt, mit einem Airbaggas befüllt wird. Dabei entfaltet sich der Airbagsack innerhalb eines kurzen Zeitbereichs zwischen 10 ms und 50 ms zwischen einem Insassen und Teilen eines Innenraumes des Kraftfahrzeuges und bildet ein Kissen. Dadurch wird verhindert, dass der Insasse gegen harte Teile des Innenraumes wie beispielsweise ein Lenkrad oder ein Armaturenbrett prallt.

Das Airbaggas wird in einem Gasgenerator mit einem Hochdruck zwischen 50 bar und 1000 bar bereitgestellt. Bei dem Gasgenerator kann es sich um einen pyrotechnischen Gasgenerator handeln, bei dem ein pyrotechnischer Zünder nach einem elektrischen Signal eine Membran zerstört und so den Gasgenerator öffnet. Das darin bereitgestellte Airbaggas kann so aus dem Gasgenerator in den Airbagsack strömen, diesen füllen, und so für seine Entfaltung sorgen.

Um einen optimalen Füllverlauf des Airbagsackes durchführen zu können, ist eine Steuerung einer Airbaggas-Strömung aus dem Gasgenerator erforderlich. Die gezielte Steuerung zu dem Airbagsack kann beispielsweise durch ein Füllventil zwischen dem unter Hochdruck stehenden Gasgenerator und dem Airbagsack ermöglicht werden. Wird der pyrotechnische Zünder mit einem elektrischen Signal aktiviert, zerstört die sich entwickelnde Temperatur des Zünders eine Membran, die den Gasgenerator verschließt. Das Airbaggas kann dann aus dem Gasgenerator ausströmen und wird durch das Füllventil dosiert in den Airbagsack geleitet.

Ein derartiges gasgenerierendes System ist beispielsweise aus der US 2007/0228013 A1 bekannt.

Das aus dem Gasgenerator ausströmende Airbaggas vermischt sich mit Reaktionsprodukten des Zünders, welche Komponenten des stromabwärts angeordneten Füllventils mit Feststoffpartikeln verschmutzen können. Beispielsweise können sich solche Feststoffpartikel an beweglichen Führungen ablagern, die dann blockieren können, oder Blenden zusetzen, die sich durch den Partikeleintrag verkleinern. Daher können diese Feststoffpartikel in unerwünschter Weise Funktionsbeeinträchtigungen und sogar ein Blockieren des Füllventils auslösen.

Diesen Problemen kann durch Anwendung eines Gewebefilters begegnet werden. Diese Maßnahme ist jedoch nicht ausreichend, da das unter Hochdruck stehende Airbaggas die Feststoffpartikel durch den Gewebefilter befördert und nicht ausreichend viele Feststoffpartikel zurückgehalten werden, da die Geschwindigkeit des Airbaggases und dadurch auch der Feststoffpartikel sehr groß ist. Zudem existieren beim Gewebe zu wenige Freiflächen, sodass die Feststoffpartikel lediglich um die Elemente des Gewebes umgelenkt werden und nur bedingt anhaften.

Aus der WO 2018/197369 A1 ist ein Gasgenerator bekannt, bei dem anstelle eines Gewebefilters eine geeignet angeordnete Prallplatte vorgesehen ist, auf der in der Gasströmung mitgetragene Feststoffpartikel angelagert werden.

Aus der US 2007/228013 A1 ist ein Airbagmodul gemäß dem Oberbegriff des Anspruchs 1 bekannt.

Aufgabe der Erfindung ist es, ein verbessertes Airbagmodul vorzuschlagen, bei dem eine Verschmutzung von Komponenten des Füllventils zuverlässiger vermieden werden kann.

Diese Aufgabe wird mit einem Airbagmodul mit der Merkmalskombination des Anspruches 1 gelöst.

Vorteilhafte Ausgestaltungen der Erfindung sind Gegenstand der abhängigen Ansprüche.

Ein Airbagmodul weist einen Airbagsack, der im Betrieb mit einem Airbaggas befüllt wird, einen Gasgenerator zum Bereitstellen des Airbaggases für den Airbagsack und ein zwischen Gasgenerator und Airbagsack angeordnetes Füllventil zum Dosieren des Airbaggases von dem Gasgenerator in den Airbagsack auf. Der Gasgenerator weist einen Zünder zum Freisetzen des Airbaggases auf, wobei der Zünder in Strömungsrichtung des freigesetzten Airbaggases vor diesem Füllventil angeordnet ist. Zwischen Zünder und Füllventil ist ein Filtergehäuse angeordnet, durch das eine Airbaggas-Strömung des freigesetzten Airbaggases von einem Einlass zu einem Auslass strömt. Vor dem Auslass ist eine Vortexinduktionseinrichtung angeordnet, um in der Airbaggas-Strömung einen Vortex zu erzeugen.

Wichtig für die Funktion der Filterung ist, dass der Massestrom des Airbaggases nicht wesentlich abgebremst wird, da der Vorgang des Aufblasens des Airbagsackes in einer definierten Zeit erfolgen muss. Das bedeutet, dass keine funktionsbeeinträchtigende Druckdifferenz über ein Filterelement entstehen darf, wie dies beispielsweise bei einem Gewebefilter der Fall ist. Daher ist das Filtergehäuse, welche das Filterelement zwischen Zünder und Füllventil bildet, so aufgebaut, dass ein freier Querschnitt stets vorhanden ist, um die Druckdifferenz über das Filterelement gering zu halten. Es wird der Effekt ausgenutzt, dass das Airbaggas und die Feststoffpartikel unterschiedliche Massen aufweisen und dadurch auch ein anderes Strömungsverhalten.

Um die Feststoffpartikel in dem Filtergehäuse zurückzuhalten, wird in der Aibaggas-Strömung ein Vortex, also ein Wirbel mit einer Drallwirkung erzeugt, durch die die Airbaggas-Strömung eine Strömungsumlenkung erfährt.

Beispielsweise ist die Vortexinduktionseinrichtung mit einer Leitfläche gebildet, die an dem Einlass angeordnet ist, und deren Flächennormale in einem Winkel > 0° und < 90° zu einer Strömungsachse der Airbaggas-Strömung angeordnet ist, welche die Airbagas-Strömung beim Einströmen in das Filtergehäuse an dem Einlass aufweist. Die Vortexinduktionseinrichtung bildet somit wenigstens eine Leitfläche, die direkt von der Airbaggas-Strömung an dem Einlass angeströmt wird. Während das Airbaggas eine Strömungsumlenkung erfährt, können die Feststoffpartikel an der Leitfläche anhaften.

Durch Strömungsumlenkung des Airbaggases wird der Airbaggas-Strömung ein Drall mitgegeben, sodass sich die Airbgas-Strömung in einem Wirbel in dem Filtergehäuse weiterbewegt. Der induzierte Wirbel prallt mit einer höheren Häufigkeit an begrenzende Wände des Filtergehäuses, sodass eine große Fläche zum Anhaften der Feststoffpartikel zu Verfügung steht.

Alternativ zu einer einfachen Leitfläche kann die Vortexinduktionseinrichtung auch an einer Blende zwischen dem Einlass und dem Auslass angeordnet sein, wobei die Blende einerseits eine ebene Blockierfläche mit einer Flächennormalen aufweist, wobei die Flächennormale koaxial zu einer Strömungsachse der Airbaggas-Strömung beim Einströmen in das Filtergehäuse an dem Einlass ist, sowie wenigstens eine integral mit der Blockierfläche ausgebildete Leitfläche, deren Flächennormale in einem Winkel > 0° und < 90° zu einer Strömungsachse der Airbaggas-Strömung angeordnet ist, die die Airbaggas-Strömung beim Einströmen in das Filtergehäuse an dem Einlass aufweist.

Die Airbaggas-Strömung strömt daher beim Einströmen in das Filtergehäuse die Blockierfläche an, wobei Feststoffpartikel an der angeströmten Seite der Blockierfläche anhaften. An der Blockierfläche ist die Leitfläche ausgebildet, die schräg zu der Blockierfläche über die Blockierfläche weg steht und somit zu einer Strömungsumlenkung in der Airbaggas-Strömung führt. Auch die Leitfläche wird von der Airbaggas-Strömung angeströmt, sodass Feststoffpartikel an der Leitfläche anhaften. Durch die Umlenkung der Airbaggas-Strömung entsteht auf der nicht angeströmten Seite der Blende ein Drall in der Airbaggas-Strömung im Innenbereich des Filtergehäuses.

Vorzugsweise ist die Vortexinduktionseinrichtung so an dem Einlass angeordnet, dass sich eine Drehachse des induzierten Vortexes koaxial zu der Filtergehäuselängsachse ausbildet. Die Airbaggas-Strömung bewegt sich somit entlang der Filtergehäuselängsachse auf den Auslass zu und nimmt durch den induzierten Vortex einen möglichst großen Strömungsweg, auf dem Feststoffpartikel von dem Airbaggas getrennt werden können.

Der Auslass und der Einlass sind erfindungsgemäß koaxial zueinander und insbesondere koaxial zu der Filtergehäuselängsachse angeordnet. Der Auslass und der Einlass befinden sich somit vorteilhaft zentral in dem Filtergehäuse und sind rotationssymmetrisch um die zentrale Längsachse des Filtergehäuses ausgebildet.

Vorzugsweise bildet das Filtergehäuse Vortexleitwände aus, um den Vortex schraubenförmig entlang der Filtergehäuselängsachse in Richtung des Auslasses zu leiten. Die Feststoffpartikel können dann durch Wechselwirkung der Airbaggas-Strömung mit den Vortexleitwänden an diesen anhaften und somit die Airbaggas-Strömung von den Feststoffpartikeln gereinigt werden.

Vorteilhaft verlaufen die Vortexleitwände entlang der Filtergehäuselängsachse konusförmig. Durch die Gestaltung eines Konus in dem Filtergehäuse kann die Airbaggas-Strömung in ihrer Geschwindigkeit beeinflusst werden. Bei einem in Strömungsrichtung größer werdenden Konus kann die Airbaggas-Strömung verlangsamt, bei einem kleiner werdenden Konus beschleunigt werden. Da das Airbaggas und die Feststoffpartikel unterschiedliche Massen aufweisen und somit unterschiedliche Strömungsverhalten haben, kann durch die Gestaltung des Konus - oder alternativ einer geraden Vortexleitwand - die Filterwirkung des Filtergehäuses gezielt eingestellt werden.

Vorteilhaft ist der Auslass mit einem zylinderförmigen Röhrchen gebildet, das in das Filtergehäuse hineinragt, um gemeinsam mit dem Filtergehäuse eine Partikelfalle für in der Airbaggas-Strömung transportierte Feststoffpartikel zu bilden. Dadurch, dass der Auslass in das Filtergehäuse hineinragt, ist an einem Ende des Filtergehäuses ein Totvolumen vorhanden, in dessen Bereich die Airbaggas-Strömung wieder umgelenkt wird. Die Feststoffpartikel können sich in diesem Bereich sammeln.

Die von den Feststoffpartikeln gereinigte Airbaggas-Strömung strömt dann aus dem Auslass in Richtung auf den Airbagsack aus dem Filtergehäuse aus.

Das System kann robust und kompakt aufgebaut werden, wobei die Druckdifferenz über das Filtergehäuse durch die freien Strömungsquerschnitte geringgehalten werden kann.

Eine vorteilhafte Ausgestaltung der Erfindung wird nachfolgend anhand der beigefügten Zeichnungen näher erläutert. Darin zeigt:
- Fig. 1: eine schematische Darstellung eines Airbagmoduls, das einen Gasgenerator, einen Airbagsack und ein dazwischen angeordnetes Füllventil aufweist, wobei zwischen Gasgenerator und Füllventil ein Filtergehäuse angeordnet ist;
- Fig. 2: eine detaillierte Längsschnittdarstellung des Filtergehäuses aus Fig. 1 mit einer Vortexinduktionseinrichtung;
- Fig. 3: eine Draufsicht auf die Vortexinduktionseinrichtung aus Fig. 2; und
- Fig. 4: eine seitliche Querschnittansicht der Vortexinduktionseinrichtung aus Fig. 3.

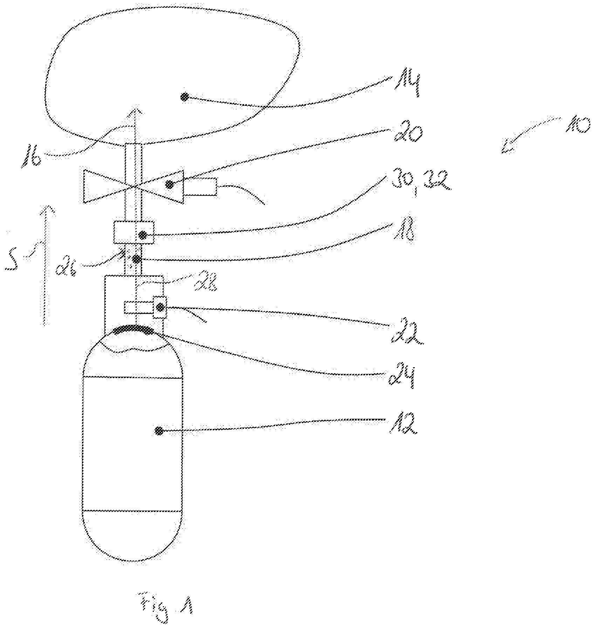

Fig. 1 zeigt ein Airbagmodul 10, das einen Gasgenerator 12 und einen Airbagsack 14 aufweist. Der Gasgenerator 12 stellt Airbaggas 16 für den Airbagsack 14 bereit, wobei zwischen dem Airbagsack 14 und dem Gasgenerator 12 eine Gaszuführung 18 angeordnet ist, über die das Airbaggas 16 von dem Gasgenerator 12 zu dem Airbagsack 14 geleitet werden kann.

In der Gaszuführung 18 ist ein Füllventil 20 angeordnet, das die Gaszuführung 18 gezielt öffnen bzw. schließen kann, so dass ein von dem Gasgenerator 12 zu dem Airbagsack 14 zugeführter Massestrom m des Airbaggases 16 gezielt und vordefiniert gesteuert werden kann.

Um das Airbaggas 16 aus dem Gasgenerator 12 freizusetzen, ist ein Zünder 22 an dem Gasgenerator 12 vorgesehen, der bei einem elektrischen Signal seine Temperatur erhöht und dabei eine Membran 24 zerstört, die den Gasgenerator 12 verschließt. Ist die Membran 24 zerstört, kann das Airbaggas 16 aus dem Gasgenerator 12 ausströmen, durch das Füllventil 20 dosiert werden und so vordefiniert in den Airbagsack 14 gelangen.

Das aus dem Gasgenerator 12 ausströmende Airbaggas 16 vermischt sich jedoch mit Reaktionsprodukten des Zünders 22, so dass Feststoffpartikel 26, die in der Airbaggas-Strömung 28 mittransportiert werden, das Füllventil 20 verschmutzen und blockieren können.

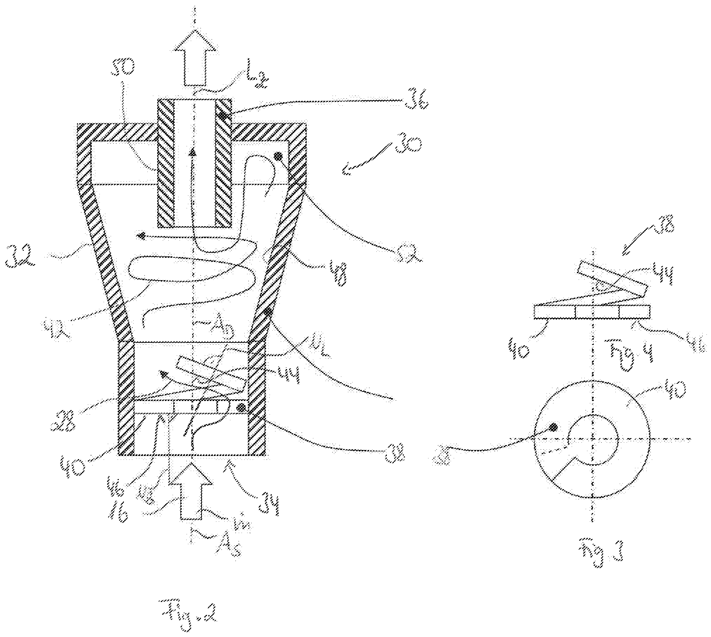

Um dies zu vermeiden, ist zwischen dem Zünder 22 und dem Füllventil 20 ein Filterelement 30 angeordnet, das nachfolgend mit Bezug auf Fig. 2 in einer Längsschnittdarstellung detailliert beschrieben wird.

Das in Fig. 2 gezeigte Filterelement 30 ist aus einem Filtergehäuse 32 gebildet, welches einen Einlass 34 und einen Auslass 36 aufweist, wobei die Airbaggas-Strömung 22 durch den Einlass 34 in das Filtergehäuse 32 eintritt, durch dieses hindurchströmt, und dann das Filtergehäuse 32 über den Auslass 36 in Richtung auf das Füllventil 20 verlässt.

Im Bereich des Einlasses 34 ist eine Vortexinduktionseinrichtung 38 angeordnet, die als eine Art Blende 40 für die Airbaggas-Strömung 28 wirkt und in der Airbaggas-Strömung 28, die sich im Wesentlichen entlang einer Filtergehäuselängsachse Lz bewegt, einen Vortex 42 induziert.

Die Vortexinduktionseinrichtung 38 weist hierzu eine Leitfläche 44 auf, deren Flächennormale N_{L} schräg zu einer Strömungsachse As der Airbaggas-Strömung 28 ausgerichtet ist, das heißt in einem Winkel > 0° und < 90° relativ zu der Strömungsachse As.

In der vorliegenden Ausführungsform ist die Leitfläche 44 an der Blende 40 ausgebildet, die zusätzlich eine ebene Blockierfläche 46 aufweist, deren Flächennormale N_{B} koaxial ist zu der Strömungsachse As. Das heißt, die Blockierfläche 46 ist senkrecht in der Airbaggas-Strömung 28 angeordnet, während die Leitfläche 44 sich ähnlich wie ein Flügel über die Blockierfläche 46 erhebt und angeschrägt ist. Blockierfläche 46 und Leitfläche 44 sind dabei integral miteinander ausgebildet. Statt einer einzigen Leitfläche 44 können auch mehrere Flügel, das heißt mehrere Leitflächen 44, an der Blende 44 angeordnet sein. Es ist auch möglich, die Vortexinduktionseinrichtung 38 so auszubilden, dass die Blockierfläche 46 nicht nötig ist und lediglich mit Leitflächen 44 gearbeitet wird.

Die in Fig. 2 gezeigte Vortexinduktionseinrichtung 38 ist in Fig. 3 in einer Draufsicht und in Fig. 4 in einer seitlichen Querschnittansicht gezeigt.

Strömt nun die Airbaggas-Strömung 28 in Strömungsrichtung S auf die Vortexinduktionseinrichtung 38 zu, trifft sie zunächst auf die Blockierfläche 46, wobei in der Airbaggas-Strömung 28 vorhandene Feststoffpartikel 26 haften bleiben. Weiter umströmt die Airbaggas-Strömung 28 die Blockierfläche 46 und trifft auf die Leitfläche 44, wo weitere Feststoffpartikel 26, die noch in der Airbaggas-Strömung 28 vorhanden sind, haften bleiben. Die Leitfläche 44 ist so angeordnet, dass die Airbaggas-Strömung 28 zu einem Wirbel, das heißt einem Vortex 42, umgelenkt wird, und zwar derart, dass sich ein Vortex 42 ausbildet, dessen Drehachse A_{D} koaxial zu der Filtergehäuselängsachse Lz ausgebildet ist. Die Airbaggas-Strömung 28 bewegt sich somit schraubenförmig in dem Filtergehäuse 32 von dem Einlass 34 auf den Auslass 36 zu. Dabei wird der Vortex 42 der Airbaggas-Strömung 28 durch Vortexleitwände 48, die das Filtergehäuse 32 ausbildet, in Richtung des Auslasses 36 geleitet. Die Airbaggas-Strömung 28 berührt dabei beständig die Vortexleitwände 48 des Filtergehäuses 32, wodurch wiederum in der Airbaggas-Strömung 28 vorhandene Feststoffpartikel 26 an den Vortexleitwänden 48 haften bleiben.

In der in Fig. 2 gezeigten Ausführungsform verlaufen die Vortexleitwände 48 konusförmig, wobei der Konus sich erweitert, wodurch die Geschwindigkeit der Airbaggas-Strömung 28 verringert wird. Alternativ ist es jedoch auch möglich, die Vortexleitwände 48 als sich verengenden Konus auszubilden, um so die Geschwindigkeit der Airbaggas-Strömung 28 zu erhöhen bzw. gerade Vortexleitwände 48 zu verwenden, die die Geschwindigkeit der Airbaggas-Strömung 28 nicht verändern.

Der Auslass 36 und der Einlass 34 sind koaxial zueinander und koaxial zu der Filtergehäuselängsachse Lz angeordnet, wobei der Auslass 36 mit einem zylinderförmigen Röhrchen 50 gebildet, das in das Filtergehäuse 32 hineinragt. Dieses Röhrchen 50 bildet gemeinsam mit dem Filtergehäuse 32 ein Totvolumen, welches als Partikelfalle 52 wirkt, in der sich die Feststoffpartikel 26 aus der Airbaggas-Strömung 28 sammeln und somit von dem reinen gasförmigen Airbaggas 16 getrennt werden. Der Vortex 42 bewegt sich schraubenförmig bis ans Ende des Filtergehäuses 32 im Bereich des Auslasses 36 an dem Röhrchen 50 vorbei, sodass die Airbaggas-Strömung 28 wieder umgelenkt wird, um letztendlich aus dem Auslass 36 herausströmen zu können.

Durch die unterschiedlichen Massen des gasförmigen Airbaggases 16 und der darin enthaltenen Feststoffpartikel 26 kann das Airbaggas 16 dieser Umlenkung besser folgen als die Feststoffpartikel 26, was dazu führt, dass die Feststoffpartikel 26 in der Partikelfalle 52 zurückbleiben.

Das Airbaggas 16 ist somit weitgehend von Feststoffpartikel 26 gereinigt, sodass das nachfolgende Füllventil 20 weniger stark verunreinigt und blockiert werden kann.

Alternativ zu der Anordnung der Blende 40 gemäß Fig. 2 ist es auch möglich, die Vortexinduktionseinrichtung 38 direkt durch den Einlass 34 zu bilden, indem er so in dem Filtergehäuse 32 angeordnet ist, dass die Strömungsachse As der Airbaggas-Strömung 28 in einem Winkel zwischen 0° und 90° zu der Filtergehäuselängsachse Lz angeordnet ist.

Der Einlass 34 befindet sich somit tangential relativ zu der Filtergehäuselängsachse Lz im Bereich einer Vortexleitwand 48, wodurch der Vortex 42 im Innenbereich des Filtergehäuses 32 erzeugt wird.

## Patentansprüche

1. Airbagmodul (10), aufweisend:
- einen Airbagsack (14), der im Betrieb mit einem Airbaggas (16) befüllt wird;
- einen Gasgenerator (12) zum Bereitstellen des Airbaggases (16) für den Airbagsack (14); und
- ein zwischen Gasgenerator (12) und Airbagsack (14) angeordnetes Füllventil (20) zum Dosieren des Airbaggases (16) von dem Gasgenerator (12) in den Airbagsack (14),
wobei der Gasgenerator (12) einen Zünder (22) zum Freisetzen des Airbaggases (16) aufweist, wobei der Zünder (22) in Strömungsrichtung (S) des freigesetzten Airbaggases (16) vor dem Füllventil (20) angeordnet ist,
wobei zwischen Zünder (22) und Füllventil (20) ein Filtergehäuse (32) angeordnet ist, durch das eine Airbaggas-Strömung (28) des freigesetzten Airbaggases (16) entlang einer Filtergehäuselängsachse (Lz) von einem Einlass (34) zu einem Auslass (36) strömt,
**dadurch gekennzeichnet, dass**
vor dem Auslass (36) eine Vortexinduktionseinrichtung (38) angeordnet ist, um in der Airbaggas-Strömung (28) einen Vortex (42) zu erzeugen,
wobei der Auslass (36) und der Einlass (34) koaxial zueinander und insbesondere koaxial zu der Filtergehäuselängsachse (Lz) angeordnet sind.

2. Airbagmodul (10) nach Anspruch 1,
**dadurch gekennzeichnet, dass** die Vortexinduktionseinrichtung (38) mit einer Leitfläche (44) gebildet ist, die an dem Einlass (34) angeordnet ist, und deren Flächennormale in einem Winkel > 0° und < 90° zu einer Strömungsachse (As) der Airbaggas-Strömung (28) angeordnet ist, welche die Airbaggas-Strömung (28) beim Einströmen in das Filtergehäuse (32) an dem Einlass (34) aufweist.

3. Airbagmodul (10) nach einem der Ansprüche 1 oder 2,
**dadurch gekennzeichnet, dass** die Vortexinduktionseinrichtung (38) an einer Blende (40) zwischen dem Einlass (34) und dem Auslass (36) angeordnet ist, welche aufweist:
- eine ebene Blockierfläche (46) mit einer Flächennormalen (N_{B}), die koaxial ist zu einer Strömungsachse (As) der Airbaggas-Strömung (28) beim Einströmen in das Filtergehäuse (32) an dem Einlass (34); und
- wenigstens eine integral mit der Blockierfläche (46) ausgebildete Leitfläche (44), deren Flächennormale (N_{L}) in einem Winkel > 0° und < 90° zu einer Strömungsachse (A_{S} )der Airbaggas-Strömung (28) angeordnet ist, die die Airbaggas-Strömung (28) beim Einströmen in das Filtergehäuse (32) an dem Einlass (34) aufweist.

4. Airbagmodul (10) nach einem der Ansprüche 1 bis 3,
**dadurch gekennzeichnet, dass** die Vortexinduktionseinrichtung (38) so an dem Einlass (34) angeordnet ist, dass sich eine Drehachse (A_{D})des induzierten Vortexes (42) koaxial zu der Filtergehäuselängsachse (Lz) ausbildet.

5. Airbagmodul (10) nach einem der Ansprüche 1 bis 4,
**dadurch gekennzeichnet, dass** das Filtergehäuse (32) Vortexleitwände (48) ausbildet, um den Vortex (42) schraubenförmig entlang der Filtergehäuselängsachse (Lz) in Richtung des Auslasses (36) zu leiten.

6. Airbagmodul (10) nach Anspruch 5,
**dadurch gekennzeichnet, dass** die Vortexleitwände (48) entlang der Filtergehäuselängsachse (Lz) konusförmig verlaufen.

7. Airbagmodul (10) nach einem der Ansprüche 1 bis 6,
**dadurch gekennzeichnet, dass** der Auslass (26) mit einem zylinderförmigen Röhrchen (50) gebildet ist, das in das Filtergehäuse (32) hineinragt, um gemeinsam mit dem Filtergehäuse (32) eine Partikelfalle (52) für in der Airbaggas-Strömung (28) transportierte Feststoffpartikel (26) zu bilden.

## Claims

1. Airbag module (10) having:
- an airbag (14), which, in operation, is filled with an airbag gas (16);
- a gas generator (12), which serves for providing the airbag gas (16) for the airbag (14); and
- a filling valve (20), which is arranged between gas generator (12) and airbag (14) and serves for metering the airbag gas (16) from the gas generator (12) into the airbag (14),
wherein the gas generator (12) has an igniter (22) for release of the airbag gas (16), wherein the igniter (22) is arranged upstream of the filling valve (20) in the flow direction (S) of the released airbag gas (16),
wherein, between igniter (22) and filling valve (20), there is arranged a filter housing (32) through which an airbag-gas flow (28) of the released airbag gas (16) flows along a filter-housing longitudinal axis (L_{Z}) from an inlet (34) to an outlet (36),
**characterized in that**, upstream of the outlet (36), there is arranged a vortex-induction device (38) for the purpose of generating a vortex (42) in the airbag-gas flow (28),
wherein the outlet (36) and the inlet (34) are arranged coaxially with respect to one another and in particular coaxially with respect to the filter-housing longitudinal axis (L_{Z}).

2. Airbag module (10) according to Claim 1,
**characterized in that** the vortex-induction device (38) is formed with a guide surface (44) which is arranged at the inlet (34) and whose surface normal is positioned at an angle > 0° and < 90° to a flow axis (A_{S}) of the airbag-gas flow (28) that the airbag-gas flow (28) has during the flow into the filter housing (32) at the inlet (34).

3. Airbag module (10) according to either of Claims 1 and 2,
**characterized in that** the vortex-induction device (38) is arranged on an orifice plate (40) between the inlet (34) and the outlet (36), said orifice plate having:
- a planar blocking surface (46) with a surface normal (N_{B}) that is coaxial with respect to a flow axis (A_{S}) of the airbag-gas flow (28) during the flow into the filter housing (32) at the inlet (34); and
- at least one guide surface (44) which is formed integrally with the blocking surface (46) and whose surface normal (N_{L}) is positioned at an angle > 0° and < 90° to a flow axis (A_{S}) of the airbag-gas flow (28) that the airbag-gas flow (28) has during the flow into the filter housing (32) at the inlet (34).

4. Airbag module (10) according to one of Claims 1 to 3,
**characterized in that** the vortex-induction device (38) is arranged at the inlet (34) in such a way that an axis of rotation (A_{D}) of the induced vortex (42) is formed so as to be coaxial with respect to the filter-housing longitudinal axis (L_{Z}).

5. Airbag module (10) according to one of Claims 1 to 4,
**characterized in that** the filter housing (32) forms vortex guide walls (48) for the purpose of guiding the vortex (42) helically along the filter-housing longitudinal axis (L_{Z}) in the direction of the outlet (36) .

6. Airbag module (10) according to Claim 5,
**characterized in that** the vortex guide walls (48) extend in a conical manner along the filter-housing longitudinal axis (L_{Z}).

7. Airbag module (10) according to one of Claims 1 to 6,
**characterized in that** the outlet (26) is formed with a small cylindrical tube (50) which projects into to the filter housing (32) for the purpose of forming, together with the filter housing (32), a particle trap (52) for solid particles (26) transported in the airbag-gas flow (28) .

## Revendications

1. Module de coussin gonflable (10), présentant :
- un sac de coussin gonflable (14) qui, en fonctionnement, est rempli d'un gaz de coussin gonflable (16) ;
- un générateur de gaz (12) pour fournir le gaz de coussin gonflable (16) au sac de coussin gonflable (14) ; et
- une soupape de remplissage (20) agencée entre le générateur de gaz (12) et le sac de coussin gonflable (14) pour doser le gaz de coussin gonflable (16) depuis le générateur de gaz (12) dans le sac de coussin gonflable (14),
le générateur de gaz (12) présentant un allumeur (22) pour libérer le gaz de coussin gonflable (16), l'allumeur (22) étant agencé avant la soupape de remplissage (20) dans la direction d'écoulement (S) du gaz de coussin gonflable libéré (16),
un boîtier de filtre (32) étant agencé entre l'allumeur (22) et la soupape de remplissage (20), à travers lequel un écoulement de gaz de coussin gonflable (28) du gaz de coussin gonflable libéré (16) s'écoule le long d'un axe longitudinal de boîtier de filtre (L_{Z}) d'une entrée (34) à une sortie (36), **caractérisé en ce qu'**un dispositif d'induction de vortex (38) est agencé avant la sortie (36) afin de produire un vortex (42) dans l'écoulement de gaz de coussin gonflable (28),
la sortie (36) et l'entrée (34) étant agencées coaxialement l'une par rapport à l'autre et notamment coaxialement par rapport à l'axe longitudinal de boîtier de filtre (L_{Z}).

2. Module de coussin gonflable (10) selon la revendication 1,
**caractérisé en ce que** le moyen d'induction de vortex (38) est formé avec une surface de guidage (44) qui est agencée à l'entrée (34) et dont la normale à la surface est agencée à un angle > 0° et < 90° par rapport à un axe d'écoulement (A_{S}) de l'écoulement de gaz de coussin gonflable (28) que l'écoulement de gaz de coussin gonflable (28) présente à l'entrée (34) lorsqu'il s'écoule dans le boîtier de filtre (32).

3. Module de coussin gonflable (10) selon l'une quelconque des revendications 1 ou 2,
**caractérisé en ce que** le dispositif d'induction de vortex (38) est agencé sur un diaphragme (40) entre l'entrée (34) et la sortie (36), qui présente :
- une surface de blocage plane (46) ayant une normale à la surface (N_{B}) qui est coaxiale à un axe d'écoulement (A_{S}) de l'écoulement de gaz de coussin gonflable (28) à l'entrée (34) lorsqu'il s'écoule dans le boîtier de filtre (32) ; et
- au moins une surface de guidage (44) réalisée d'un seul tenant avec la surface de blocage (46), dont la normale à la surface (N_{L}) est agencée à un angle > 0° et < 90° par rapport à un axe d'écoulement (A_{S}) de l'écoulement de gaz de coussin gonflable (28) que l'écoulement de gaz de coussin gonflable (28) présente à l'entrée (34) lorsqu'il s'écoule dans le boîtier de filtre (32).

4. Module de coussin gonflable (10) selon l'une quelconque des revendications 1 à 3,
**caractérisé en ce que** le moyen d'induction de vortex (38) est agencé à l'entrée (34) de telle sorte qu'un axe de rotation (A_{D}) du vortex induit (42) est réalisé coaxialement à l'axe longitudinal de boîtier de filtre (L_{Z}).

5. Module de coussin gonflable (10) selon l'une quelconque des revendications 1 à 4,
**caractérisé en ce que** le boîtier de filtre (32) réalise des parois de guidage de vortex (48) pour guider le vortex (42) de manière hélicoïdale le long de l'axe longitudinal de boîtier de filtre (L_{Z}) en direction de la sortie (36).

6. Module de coussin gonflable (10) selon la revendication 5,
**caractérisé en ce que** les parois de guidage de vortex (48) s'étendent en forme de cône le long de l'axe longitudinal de boîtier de filtre (L_{Z}).

7. Module de coussin gonflable (10) selon l'une quelconque des revendications 1 à 6,
**caractérisé en ce que** la sortie (26) est formée avec un petit tube cylindrique (50) qui fait saillie dans le boîtier de filtre (32) pour former, conjointement avec le boîtier de filtre (32), un piège à particules (52) pour les particules solides (26) transportées dans l'écoulement de gaz de coussin gonflable (28).
